# EUROPÄISCHE PATENTANMELDUNG

(11) **EP 2 034 216 A2**
(43) Veröffentlichungstag der Anmeldung: **11.03.2009**
(21) Anmeldenummer: 08014493.4
(22) Anmeldetag: 14.08.2008
(51) Int. Cl.: F16G 13/04

(54) **Laschenkette**

(30) Priorität: 31.08.2007 US 967203 P
(71) Anmelder: LuK Lamellen und Kupplungsbau Beteiligungs KG, 77815 Bühl (DE)
(72) Erfinder: Ispolatova, Olga, 77815 Bühl (DE); Junig, Marcus, 77815 Bühl (DE); Pichura, Michael, 77815 Bühl (DE); Simonov, Anton, 77815 Bühl (DE)

(57) **Zusammenfassung**

Laschenkette (1) aus einer Vielzahl von Laschen (2,2'), die jeweils Laschenstapel (4,4') bilden, wobei benachbarte Laschenstapel (4,4') mit Paaren von Wiegestücken (5,5'), die sich paarweise mit Wälzprofilen (17) aufeinander abstützen, gelenkig miteinander verbunden sind, wobei einige, vorzugsweise jeder zweite, Laschenstapel (4,4') an seinen Außenseiten jeweils eine Decklasche (7) aufweist und die dem mit den Decklaschen (7) versehenen Laschenstapel (4) zugeordneten beiden Wiegestücke (5') in Öffnungen (9) der Decklaschen (7) aufgenommen sind, insbesondere verpresst sind, wobei mindestens eine der Öffnungen (9) beiderseits einer Anlagefläche (26) des Wälzprofiles (17) des aufgenommenen Wiegestükes (5') jeweils einen Freistich (A,B) aufweist, dadurch gekennzeichnet, dass die Öffnung (9) der Decklasche (7) einen dritten Freistich (C) aufweist.

## Beschreibung

Die vorliegende Erfindung betrifft eine Laschenkette aus einer Vielzahl von Laschen, die jeweils Laschenstapel bilden, wobei benachbarte Laschenstapel mit Paaren von Wiegestücken, die sich paarweise mit Wälzprofilen aufeinander abstützen, gelenkig miteinander verbunden sind, wobei einige, vorzugsweise jeder zweite, Laschenstapel an seinen Außenseiten jeweils eine Decklasche aufweist und die dem mit den Decklaschen versehenen Laschenstapel zugeordneten beiden Wiegestücke in Aufnahmeöffnungen der Decklaschen aufgenommen sind. Die Erfindung betrifft des Weiteren eine Lasche für eine derartige Laschenkette.

Eine gattungsgemäße Laschenkette ist aus der WO 2006/133667 bekannt. Dort wird eine Laschenkette vorgestellt, bei der Wiegestücke mit Führungslaschen fest verbunden sind, wobei die Führungslaschen Aufnahmeöffnungen zur Aufnahme der Wiegestücke aufweisen, die zwei Freistiche haben. Eine Laschenkette, insbesondere Zahnlaschenkette besteht üblicherweise aus Laschen bzw. Zahnlaschen, sowie Decklaschen und kurzen und langen Wiegestücken. Die unterschiedliche Anzahl von Zahnlaschen in den Laschengliedern führt zu einer ungleichmäßigen Steifigkeitsverteilung im Kettenstrang. Die Steifigkeit der Decklaschen dient dazu, diesen Steifigkeitsunterschied auszugleichen. Die Decklasche hat zudem die Funktion der Seitenführung der Zahnkette. Die langen Wiegestücke werden in entsprechende Öffnungen der Decklaschen gepresst. Die Pressverbindung muss die durch die Seitenführung entstehenden Kräfte aufnehmen. In der Öffnung der Decklasche zur Aufnahme der Wiegestücke gibt es zwei Bereiche mit besonders kleinen Radien, an denen kritische Spannungen entstehen. Aus der WO 2006/133667 ist die Verwendung von Freistichen an diesen zwei Stellen bekannt, um die kritische Spannung zu reduzieren.

Die Freistiche nach Stand der Technik reduzieren die auftretenden Spitzenspannungen. In bestimmten Fällen können die auftretenden Spitzenspannungen jedoch trotzdem unerwünscht hoch sein. Daher ist es eine Aufgabe der vorliegenden Erfindung, die bei Belastung auftretenden Spannungen in der Führungslasche weiter zu reduzieren.

Dieses Problem wird gelöst durch eine Laschenkette aus einer Vielzahl von Laschen, die jeweils Laschenstapel bilden, wobei benachbarte Laschenstapel mit Paaren von Wiegestücken, die sich paarweise mit Wälzprofilen aufeinander abstützen, gelenkig miteinander verbunden sind, wobei einige, vorzugsweise jeder zweite, Laschenstapel an seinen Außenseiten jeweils eine Decklasche aufweist und die dem mit den Decklaschen versehenen Laschenstapel zugeordneten beiden Wiegestücke in Öffnungen der Decklaschen aufgenommen sind, insbesondere verpresst sind, wobei mindestens eine der Öffnungen beiderseits einer Anlagefläche des Wälzprofiles des aufgenommenen Wiegestückes jeweils einen Freistich aufweist, wobei die Öffnung der Decklasche einen dritten Freistich aufweist.

Unter Laschenkette wird hier insbesondere auch eine Zahnlaschenkette verstanden. Durch den dritten Freistich werden drei getrennte, definierte Auflage- bzw. Pressungszonen erzeugt. Beim Einpressvorgang ist das "Einfädeln" des Wiegestücks dadurch erleichtert und der Einpressprozess läuft definierter ab. Der Einpressvorgang kann zudem mit einer größeren Überdeckung stattfinden, da die Bohrung elastischer ist. Die Spannungen an den kritischen Stellen werden reduziert.

Das Wiegestück liegt vorzugsweise in der Aufnahmeöffnung an drei Anlageflächen an, wobei zwischen den Anlageflächen je ein Freistich angeordnet ist. Das Profil des Wiegestückes im Bereich des dritten Freistichs ist vorzugsweise konkav, also nach innen gewölbt. Das Profil des dritten Freistichs ist vorzugsweise entweder konvex oder konkav oder eine Gerade oder ein Spline.

Das eingangs genannte Problem wird auch gelöst durch eine Decklasche für eine Laschenkette aus einer Vielzahl von Laschen, die jeweils Laschenstapel bilden, wobei benachbarte Laschenstapel mit Paaren von Wiegestücken, die sich paarweise mit Wälzprofilen aufeinander abstützen, gelenkig miteinander verbunden sind, wobei einige, vorzugsweise jeder zweite, Laschenstapel an seinen Außenseiten jeweils eine Decklasche aufweist und die dem mit den Decklaschen versehenen Laschenstapel zugeordneten beiden Wiegestücke in je einer Öffnung der Decklaschen aufgenommen sind, insbesondere verpresst sind, wobei mindestens eine der Öffnung beiderseits einer Anlageflächen des Wälzprofiles des Wiegestückes jeweils einen Freistich aufweist, wobei die Öffnung der Decklasche einen dritten Freistich aufweist. Die Öffnung weist vorzugsweise drei Anlageflächen zur flächigen Aufnahme eines Wiegestückes auf, wobei zwischen den Anlageflächen je ein Freistich angeordnet ist. Das Profil des dritten Freistichs ist vorzugsweise konvex oder konkav oder eine Gerade oder ein Spline.

Im Folgenden werden Ausführungsbeispiele der Erfindung anhand der beiliegenden Zeichnungen erläutert. Dabei zeigen:
- Fig. 1: einen Längsschnitt eines Ausschnitts einer Laschenkette;
- Fig. 2: eine Aufsicht der Laschenkette gemäß Fig. 1;
- Fig. 3: ein Ausführungsbeispiel einer erfindungsgemäßen Führungslasche;
- Fig. 4: das Wiegestück sowie die Kontur der zugehörigen Aufnahmeöffnung in Fig. 3;
- Fig. 5: verschiedene Ausführungen des dritten Freistichs;
- Fig. 6a: Spannungsverläufe nach Stand der Technik und
- Fig. 6b: Spannungsverläufe bei einem erfindungsgemäßen Freistich.

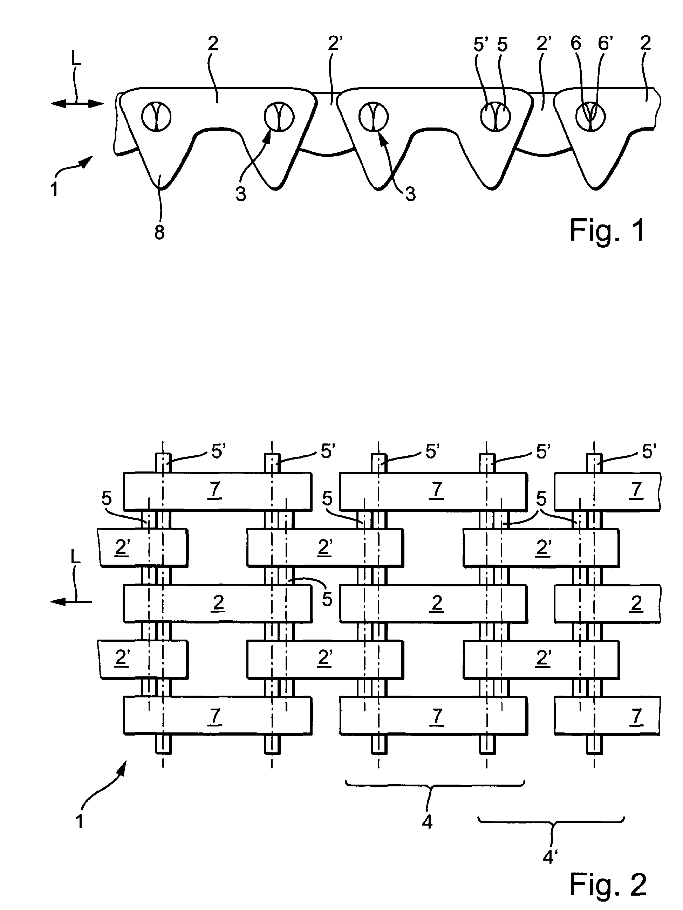

Fig. 1 zeigt eine Seitenansicht und Fig. 2 eine Aufsicht eines Ausschnitts einer Laschenkette 1 mit Zweilaschenverband. Anhand der der Figuren 1 und 2 wird der grundsätzliche Aufbau von Laschenketten sowie die in den erfindungsgemäßen Ausführungsbeispielen verwendeten Begriffe erläutert. Die Ausführungsbeispiele werden am Beispiel einer Laschenkette mit Zweilaschenverband beschrieben, sind aber ebenso bei einer Laschenkette mit Dreilaschenverband anwendbar. Die Laschenkette 1 umfasst eine Vielzahl von Laschen 2 und Gegenlaschen 2'. Die Laschen 2 und Gegenlaschen 2' sind jeweils abwechselnd angeordnet und mit Gelenkbolzen 3 als Gelenk verbunden. Beide Enden einer Lasche sind folglich mittels eines Gelenkes mit einer oder zwei Gegenlaschen verbunden, entsprechend sind beide Enden einer Gegenlasche mittels eines Gelenkes mit einer oder zwei Laschen verbunden. Die Gelenkbolzen 3 können einteilig sein, sind aber bevorzugt zweiteilig, wobei ein kurzes Wiegestück 5 jeweils den Laschen 2 zugeordnet ist und auf einem der Gegenlasche 2' zugeordneten langen Wiegestück 5' abrollt. Die Wiegestücke 5, 5' weisen dazu jeweils ein Wälzprofil 6 bzw. 6' auf, mit dem diese aufeinander abrollen bzw. gleiten können. Die Wälzprofile 6, 6' können identisch oder unterschiedlich sein. Quer zur Laufrichtung L, diese ist mit einem Doppelpfeil mit dem Bezugszeichen L gekennzeichnet, sind die Laschen 2 und Gegenlaschen 2' gestapelt, so dass zwischen zwei quer zur Laufrichtung L nebeneinander angeordneten Gelenkbolzen 3 eine überlappend angeordnete Gegenlasche angeordnet ist und umgekehrt zwischen zwei quer zur Laufrichtung nebeneinander liegenden Gegenlaschen jeweils überlappend eine Lasche angeordnet ist. Die so gebildeten Laschenpakete 4 von Laschen 2 bilden jeweils paketweise ein Kettenglied, entsprechend bilden die (Gegen-) Laschenpakete 4' von Gegenlaschen 2' paketweise ein Kettenglied. Die Laschen 2 und Gegenlaschen 2' sind im vorliegenden Ausführungsbeispiel identische Bauteile sein, eine Unterscheidung zwischen Laschen 2 und Gegenlaschen 2' nur durch die Anordnung erkennbar. Daher wird nachfolgend nur von Laschen 2 gesprochen, da diese mit den Gegenlaschen bis auf die Anordnung in verschiedenen Laschenpaketen (Kettengliedern) identisch sind. Beide Seiten der Laschenkette sind jeweils mit Decklaschen 7 versehen. Die Decklaschen sind hier nur jeweils an den Kettengliedern 4 angeordnet, sodass nur jedes zweite Kettenglied Decklaschen 7 aufweist. Die Decklaschen 7 sind jeweils mit den Wiegestücken 5' fest verbunden. Dazu sind die Wiegestücke durch weiter unten beschriebene Aufnahmeöffnungen geführt und haben einen Presssitz, sind also mit den Decklaschen 7 verpresst. Während die Laschen 2, die wie die Decklaschen 7 zu einem Kettenglied 4 gehören, mit den Wiegestücken 5 verbunden sind (sich an diesen abstützen), sind die Decklaschen mit den Wiegestücken 5' der benachbarten Kettenglieder 4' fest verpresst. Die Wiegestücke 5 ragen nicht durch die Decklaschen 7 hindurch.

In Fig. 2 ist ein Stapel von jeweils einer Lasche 2 sowie an beiden Außenseiten je einer Decklasche 7 und Stapel von zwei Gegenlaschen 2' dargestellt, hier können aber auch Stapel mit einer beliebigen anderen Anzahl an Laschen 2 und Gegenlaschen 2' vorgesehen sein.

Die Laschen 2 sind - wie in Fig. 1 zu erkennen ist - jeweils mit Laschenzähnen 8 versehen. Mit den Laschenzähnen 8 kann die Laschenkette 1 mit einer Verzahnung, z. B. eines Zahnrades, kämmen. Die Teilung zwischen Laschen 2 und Gegenlaschen 2' ist dabei so ausgelegt, dass sich insgesamt bei gestreckter Kette eine gleichmäßige Teilung zwischen den Laschenzähnen 8 ergibt. Die Gegenlaschen 2' sind wie die Laschen 2 mit Laschenzähnen 8 versehen, so dass sämtliche Laschen und Gegenlaschen jeweils mit Laschenzähnen 8 versehen sind. Ebenso ist es aber möglich, entweder nur Laschen 2 oder Gegenlaschen 2' mit Laschenzähnen 8 zu versehen oder jeweils Laschen und Gegenlaschen mit nur einem Laschenzahn 9 zu versehen. Die Laschenpakete sind zu beiden Seiten von Decklaschen 7 abgeschlossen.

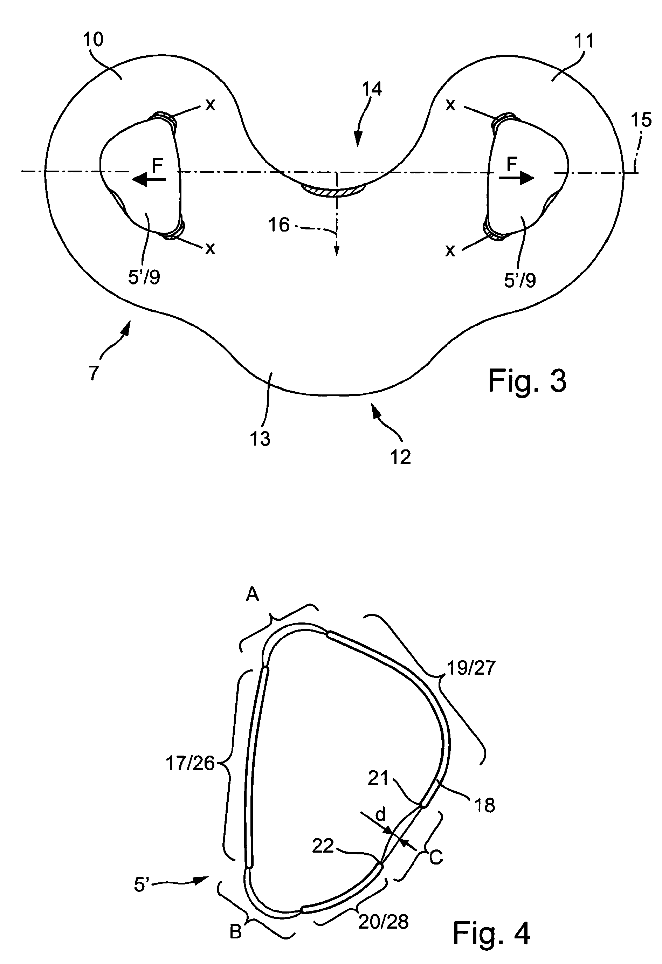

Fig. 3 zeigt eine erfindungsgemäße Decklasche (auch als Führungslasche bezeichnet) 7 mit zwei Wiegestücken 5', die jeweils in einer Öffnung 9 angeordnet sind. Zwei Wiegestücke 5' sind mit jeweils einer Öffnung 9 der Decklasche 7 jeweils verpresst. Die Decklasche 7 weist einen ersten Aufnahmebereich 10 mit einer Öffnung 9 sowie einen zweiten Aufnahmebereich 11 mit einer Öffnung 9 auf. Die beiden Aufnahmebereiche 10 und 11 sind im Wesentlichen in etwa scheibenförmig ausgelegt und werden durch einen Verbindungsbereich 12 miteinander verbunden. Der Verbindungsbereich 12 weist auf einer Seite einen Flügel 13 und auf der anderen Seite eine Ausnehmung 14 auf, so dass der Verbindungsbereich 12 von einer Verbindungsgeraden 15, die durch die Wiegestücke 5, 5' gedanklich gelegt werden kann, quer zur Kettenlaufrichtung versetzt angeordnet ist. Die versetzte Anordnung ist durch einen Pfeil 16 in Fig. 3 angedeutet. Durch die versetzte Anordnung wird die Zugsteigigkeit der Decklasche 7 bei einer Belastung in Richtung der Kraftpfeile F herabgesetzt. Der Flügel 13 dient zudem der Seitenführung der Laschenkette z.B. auf einem Kettenrad. Bei einer Belastung mit einer Kraft in Richtung der Pfeile F treten in den mit X und mit Y bezeichneten Bereichen der Decklasche 7 vergleichsweise hohe Spannungen auf.

Fig. 4 zeigt einen Querschnitt durch ein Wiegestück 5' sowie eine Öffnung 9 der Decklasche 7 zur Aufnahme des Wiegestücks 5'. Das Wiegestück 5' weist eine Wälzfläche 17 auf, mit der dieses auf dem jeweils zugeordneten Wiegestück 5 abwälzt oder ggf. gleitet. Die Oberfläche des Wiegestücks außerhalb der Wälzfläche 17 wird hier als Aufnahmeprofil 18 bezeichnet und dient der Festlegung des Wiegestückes 5' in der Öffnung 9 der Decklasche 7. Das Aufnahmeprofil umfasst dazu einen ersten Aufnahmebereich 19 und einen zweiten Aufnahmebereich 20, die jeweils an der Innenfläche der Öffnung 9 anliegen. Die Wälzfläche 17 liegt in dem Bereich, in dem das Wiegestück 5' von der Decklasche 7 aufgenommen ist, an einer Anlagefläche 26 der Innenfläche der Öffnung 9 an. Der erste Aufnahmebereich 19 liegt entsprechend an einer Anlagefläche 27 und der zweite Aufnahmebereich 20 an einer Anlagefläche 28 an. Die Wälzfläche 17 sowie der erste Aufnahmebereich 19 und der zweite Aufnahmebereich 20 liegen also flächig an der Innenfläche der Öffnung 9 der Decklasche 7 an. Die Öffnung 9 und das Profil des Wiegestückes 5' sind dabei so gestaltet, dass eine Presspassung bewirkt wird. Zwischen der Anlagefläche 26 für die Wälzfläche 17 und der Anlagefläche 27 für den ersten Aufnahmebereich 19 des Wiegestückes 5' ist ein Freistich A angeordnet, zwischen der Anlagefläche 26 für die Wälzfläche 17 und der Anlagefläche 28 für den zweiten Aufnahmebereich 20 des Wiegestückes 5' ist ein Freistich B angeordnet. Die Freistiche sind also in dem Bereich angeordnet, in dem sowohl das Profil des Wiegestückes 5' als auch das Profil der Öffnung 9 eine vergleichsweise hohe Krümmung aufweist. Zusätzlich ist zwischen dem Aufnahmebereich 19 und dem Aufnahmebereich 20 ein dritter Freistich C angeordnet. Der dritte Freistich C liegt also im Wesentlichen bezüglich des Profils des Wiegestückes 5' gegenüber der Wälzfläche 17, während die Freistiche A und B an die Wälzfläche 17 angrenzen. Die Freistiche A, B, C sind demzufolge nach Art eines Dreiecks zueinander angeordnet.

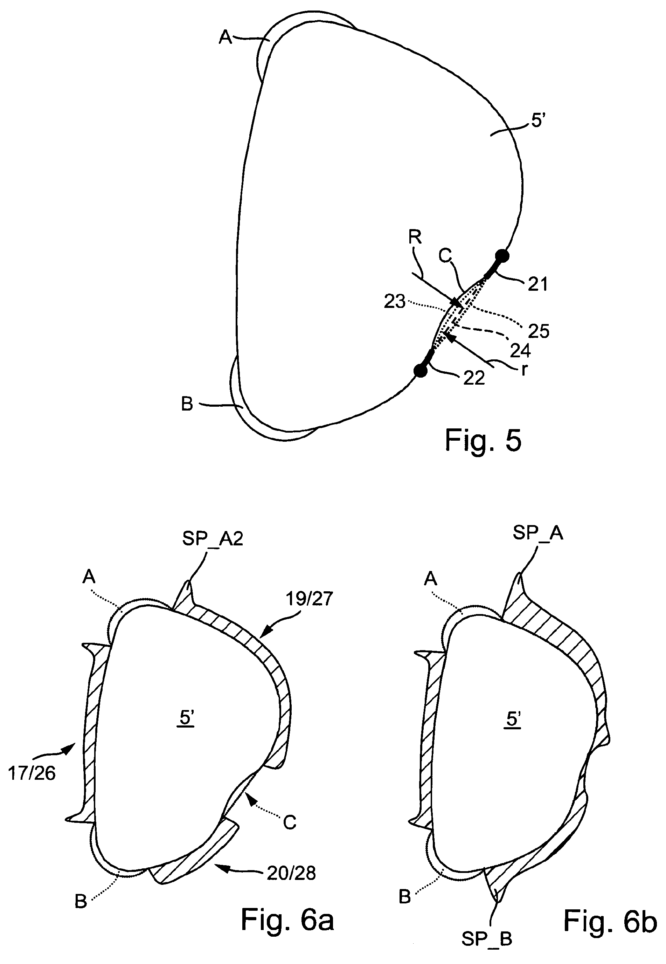

Fig. 5 zeigt mehrere Ausführungsbeispiele des Freistichs C zwischen der Anlagefläche 27 für den ersten Aufnahmebereich 19 und der Anlagefläche 28 für den zweiten Aufnahmebereich 20. Das Profil des Wiegestücks weist in diesem Bereich eine konkave Krümmung auf. Sowohl der Aufnahmebereich 19 als auch der Aufnahmebereich 20 bzw. die zugehörigen Anlageflächen 27, 28 sind demgegenüber konvex gekrümmt, so dass Punkte 21 und 22 an der Außenkontur des Wiegestücks 5' bzw. an der Öffnung 9 angegeben werden können, in denen der Übergang von konvexer zu konkaver Krümmung stattfindet. Zwischen den Übergangspunkten 21 und 22 ist demzufolge die äußere Kontur des Wiegestücks 5' konkav ausgebildet, und es entsteht gegenüber der Wandung der Öffnung 9 ein maximaler Abstand der mit d in Fig. 4 bezeichnet ist. Die Kontur der Öffnung 9 der Decklasche 7 kann in diesem Bereich konkav sein, dies ist am Beispiel einer gestrichelt dargestellten Kontur mit dem Bezugszeichen 23 dargestellt, kann aber ebenso eine gerade Kontur aufweisen, dies ist durch eine gestrichelte Linie mit dem Bezugszeichen 24 in Fig. 5 dargestellt oder kann einen konvexe Kontur aufweisen, dies ist durch eine punktierte Linie mit dem Bezugszeichen 25 in Fig. 5 dargestellt. Die konkave Kontur 23 weist einen über den Umfang gegebenenfalls veränderlichen Radius R auf, entsprechend weist der konvexe Radius 25 einen gegebenenfalls über die Umfangslänge veränderlichen Radius r auf. Die Kontur kann auch durch einen Spline vorgegeben sein. Durch die unterschiedlichen Ausgestaltungen der Oberfläche der Öffnung 9 im Bereich des Freistichs C kann der maximale Abstand d zwischen der Oberfläche des Wiegestücks 5' und der Oberfläche der Öffnung 9 variiert werden. Ebenso kann die Lage des Freistichs relativ zu den Freistichen A und B variiert werden, die konkave Einschnürung in dem Wiegestück 5' und die entsprechende Kontur der Öffnung 9 können also entlang der Aufnahmebereiche 19 bzw. 20 verschoben werden.

Fig. 6b zeigt einen Spannungsverlauf der Normalenspannung an der Oberfläche der Öffnung für eine Kontur der Öffnung 9 nach Stand der Technik und in Fig. 6a für eine erfindungsgemäße Ausgestaltung. Es treten jeweils Spannungsspitzen beiderseits der Freistiche A und B auf, wobei bei der Ausgestaltung nach Stand der Technik eine Spannungsspitze SP_A an dem dem ersten Aufnahmebereich 19 zugewandten Rand des Freistichs A sowie eine mit dem Bezugszeichen SP_B bezeichnete Spannungsspitze an dem dem Aufnahmebereich 20 zugewandten Rand des Freistichs B jeweils besonders hoch sind.

Die Spannungen sind jeweils als Abstand in Normalenrichtung zu der Kontur der Öffnung 9 aufgetragen, wobei der Abstand zu der Kontur 9 ein Maß für die Höhe der Spannung ist. Ist die Spannung gleich 0, so läuft der Graph der Spannung mit der Kontur der Öffnung 9 zusammen, ist die Spannung größer 0, so wird dies durch einen entsprechend zu dieser Kontur beabstandeten Graphen dargestellt, wobei die Fläche zwischen der Kontur der Öffnung 9 und dem Graphen der Spannung schraffiert dargestellt ist. Es handelt sich also um eine übliche Darstellung von Spannungen.

Wie aus den Fig. 6a und 6b zu erkennen ist, werden die Spannungsspitzen SP_A und SP_B durch die erfindungsgemäße Ausgestaltung deutlich verringert, zu dem verteilen sich die Spannungen über die Kontur der Aufnahmebereiche 19 und 20 abgesehen von einer Spannungsspitze SP_A2, die zu der Spannungsspitze SP_A gemäß Stand der Technik korrespondiert, in etwa gleichmäßig. Es wird durch die erfindungsgemäße Ausgestaltung also nicht nur eine deutliche Reduktion der maximal auftretenden Spannungen insbesondere direkt neben den Freistichen A und B erzielt, es wird auch eine deutlich gleichmäßigere Verteilung der Spannungen bewirkt.

### Bezugszeichenliste

- 1: Laschenkette
- 2: Laschen
- 2': Gegenlaschen
- 3: Gelenkbolzen
- 4: Kettenglied
- 4': Kettenglied
- 5: Wiegestück
- 5': Wiegestück
- 6: Wälzprofile
- 6': Wälzprofile
- 7: Decklasche
- 8: Laschenzahn
- 9: Öffnung der Decklasche zur Aufnahme eines Wiegestückes
- 10: Aufnahmebereich
- 11: Aufnahmebereich
- 12: Verbindungsbereich
- 13: Flügel
- 14: Ausnehmung
- 15: Verbindungsgerade
- 16: Pfeil
- 17: Wälzfläche
- 18: Aufnahmeprofil
- 19: Aufnahmebereich
- 20: Aufnahmebereich
- 21: Übergangspunkt der Krümmungen
- 22: Übergangspunkt der Krümmungen
- 23: Konkave Kontur
- 24: Gerade Kontur
- 25: konvexe Kontur
- 26: Anlagefläche der Öffnung 9
- 27: Anlagefläche der Öffnung 9
- 28: Anlagefläche der Öffnung 9

## Patentansprüche

1. Laschenkette (1) aus einer Vielzahl von Laschen (2, 2'), die jeweils Laschenstapel (4, 4') bilden, wobei benachbarte Laschenstapel (4, 4') mit Paaren von Wiegestücken (5, 5'), die sich paarweise mit Wälzprofilen (17) aufeinander abstützen, gelenkig miteinander verbunden sind, wobei einige, vorzugsweise jeder zweite, Laschenstapel (4, 4') an seinen Außenseiten jeweils eine Decklasche (7) aufweist und die dem mit den Decklaschen (7) versehenen Laschenstapel (4) zugeordneten beiden Wiegestücke (5') in Öffnungen (9) der Decklaschen (7) aufgenommen sind, insbesondere verpresst sind, wobei mindestens eine der Öffnungen (9) beiderseits einer Anlagefläche (26) des Wälzprofiles (17) des aufgenommenen Wiegestückes (5') jeweils einen Freistich (A, B) aufweist, **dadurch gekennzeichnet, dass** die Öffnung (9) der Decklasche (7) einen dritten Freistich (C) aufweist.

2. Laschenkette nach Anspruch 1, **dadurch gekennzeichnet, dass** das Wiegestück (5') in der Aufnahmeöffnung (9) an drei Anlageflächen (26, 27, 28) anliegt und zwischen den Anlageflächen (26, 27, 28) je ein Freistich (A, B, C) angeordnet ist.

3. Laschenkette nach Anspruch 1 oder 2, **dadurch gekennzeichnet, dass** das Profil des Wiegestückes (5') im Bereich des dritten Freistichs (C) konkav ist.

4. Laschenkette nach einem der Ansprüche 1 bis 3, **dadurch gekennzeichnet, dass** das Profil des dritten Freistichs (C) konvex ist.

5. Laschenkette nach einem der Ansprüche 1 bis 3, **dadurch gekennzeichnet, dass** das Profil des dritten Freistichs (C) konkav ist.

6. Laschenkette nach einem der Ansprüche 1 bis 3, **dadurch gekennzeichnet, dass** das Profil des dritten Freistichs (C) eine Gerade ist.

7. Laschenkette nach einem der Ansprüche 1 bis 3, **dadurch gekennzeichnet, dass** das Profil des dritten Freistichs (C) ein Spline ist.

8. Decklasche (7) für eine Laschenkette (1) aus einer Vielzahl von Laschen (2, 2'), die jeweils Laschenstapel (4, 4') bilden, wobei benachbarte Laschenstapel mit Paaren von Wiegestücken (5, 5'), die sich paarweise mit Wälzprofilen (17) aufeinander abstützen, gelenkig miteinander verbunden sind, wobei einige, vorzugsweise jeder zweite, Laschenstapel (4) an seinen Außenseiten jeweils eine Decklasche (7) aufweist und die dem mit den Decklaschen (7) versehenen Laschenstapel (4) zugeordneten beiden Wiegestücke (5') in je einer Öffnung (9) der Decklaschen (7) aufgenommen sind, insbesondere verpresst sind, wobei mindestens eine der Öffnungen (9) beiderseits einer Anlagefläche (26) des Wälzprofiles (17) des Wiegestückes (5') jeweils einen Freistich (A, B) aufweist, **dadurch gekennzeichnet, dass** die Öffnung (9) der Decklasche (7) einen dritten Freistich (C) aufweist.

9. Decklasche nach Anspruch 8, **dadurch gekennzeichnet, dass** die Öffnung drei Anlageflächen (26, 27, 28) zur flächigen Aufnahme eines Wiegestückes (5') aufweist und zwischen den Anlageflächen (26, 27, 28) je ein Freistich (A, B, C) angeordnet ist.

10. Decklasche nach einem der Ansprüche 8 oder 9, **dadurch gekennzeichnet, dass** das Profil des dritten Freistichs (C) konvex oder konkav oder eine Gerade oder ein Spline ist.
